Europäisches Patentamt

European Patent Office

Office européen des brevets

(19)

(11) Publication number: **0 146 947**
**B1**

(12) **EUROPEAN PATENT SPECIFICATION**

(45) Date of publication of patent specification: **07.12.88**

(21) Application number: **84116051.8**

(22) Date of filing: **21.12.84**

(51) Int. Cl.⁴: **G 06 K 11/06,** G 06 F 3/033

(54) **Coordinate input device with display.**

(30) Priority: **22.12.83 JP 242669/83**

(43) Date of publication of application:
**03.07.85 Bulletin 85/27**

(45) Publication of the grant of the patent:
**07.12.88 Bulletin 88/49**

(84) Designated Contracting States:
**DE FR GB IT**

(56) References cited:
**US-A-3 846 580**
**US-A-4 374 665**

**INSTRUMENTS & CONTROL SYSTEMS, vol.
47, no. 9, page 28, Radnor, US; "Strain waves
help computers "see""**
**PATENTS ABSTRACTS OF JAPAN, vol. 8, no.
51 (P-259)1488r, 8th March 1984; & JP - A - 58
200 384 (SEIKOO KEIYOU KOGYO K.K.) 21-11-
1983**

(73) Proprietor: **Wacom Co., Ltd.**
**5-23-4, Sakurada Washinomiya-cho**
**Kitakatsushika-gun Saitama-ken, 340-02 (JP)**

(72) Inventor: **Taguchi, Yoshinori**
**B 205 Green Corp Sekiguchi 728 Okinikami**
**Ageo-shi Saitama-ken, 362 (JP)**
Inventor: **Yamanami, Tsuguya**
**B 203 Green Corp Sekiguchi 728 Okinokami**
**Ageo-shi Saitama-ken, 362 (JP)**

(74) Representative: **Patentanwälte TER MEER -
MÜLLER - STEINMEISTER**
**Mauerkircherstrasse 45**
**D-8000 München 80 (DE)**

**EP 0 146 947 B1**

Courier Press, Leamington Spa, England.

## Description

Field of the Invention

The present invention relates to a coordinate input device with a display, having a display unit superposed to a position appointing tablet and capable of displaying the position which is appointed by a magnetic body on the position detecting tablet.

Description of the Prior Art:

Hitherto, a coordinate inputting apparatus has been proposed in which a tablet for inputting hand-written characters and patterns and a display unit for displaying the result of recognition of the calligraphic specimen and patterns are constructed independently and disposed separately from each other. With this type of apparatus, the user is obliged to watch both the tablet surface and the display surface alternatingly, in order to confirm that the hand-written characters and patterns scribed on the tablet have been correctly recognized and inputted. Consequently, the work for inputting the sentence by hand writing is impeded to reduce the efficiency of the work. In addition, editing operation such as correction and insertion of words and characters requires appointment of position for the correction or insertion by moving a cursor to such a position. This operation is quite troublesome because the user has to conduct a manipulation for moving the cursor while confirming the present position of the cursor and the designated word or character in the document.

On the other hand, an input/output device having a tablet and a display unit integrated with each other has been proposed in the document JP-A-58-200384. In this apparatus, a tablet formed by a thin electrode for coordinate detection on a transverse glass substrate is superposed on a liquid crystal display. Any desired position can be appointed on the tablet directly by means of a stylus pen. The superposition of the tablet and the display unit permits a direct visual check of the inputted position clearly on the display.

In this apparatus, the stylus pen has to be moved in contact with the tablet in order to appoint the desired position.

From the document US-A-3 846 580, a position detecting device is known, which comprises a first plurality of substantially parallel X-direction magnetostrictive wires, a second plurality of substantially parallel Y-direction magnetostrictive wires, an X-direction first coil wound commonly around one end of said X-direction wires, a Y-direction first coil wound commonly around one end of said Y-direction wires, a stylus including a second coil, a pulse current generator adapted to apply pulse current to either said X-direction and Y-direction coils or said second coil to induce a magnetostrictive wave along the respective coordinates, and a processing unit for detecting the time period from the moment when said magnetostrictive wave is generated until a moment when an induced voltage appears in the other of said coils.

Another magnetostrictive position detecting device is disclosed in the document DE-A-2 814 047. In this device, several detector coils are wound around each magnetostrictive wire at predetermined spacings, so that a sequence of pulses is generated, when a magnetostrictive wave propagates through the magnetostrictive wire. Another detection coil is provided in the stylus. In order to detect the appointed position, the pulses from the detection coils are counted until the signal from the detection coil in the stylus is received.

In these conventional magnetostrictive position detecting devices, the stylus must be connected to the detection device by a cord, so that writing operation for writing characters and patterns in the writing section of the tablet is inconveniently hindered by the cord. In addition, the stylus pen has to be moved in contact with the tablet or in close proximity of the tablet in order to attain a high precision of appointment of the characters.

Reference is also made to EP-A-134539 in which a position detecting apparatus is claimed, which corresponds to the position detecting tablet forming a part of the coordinate input device claimed in the present application, EP-A-134539 forms state of the art under Article 54(3,4).

Accordingly, it is a first object of the invention to provide a coordinate input device with display, wherein the appointment of position on a tablet is made by quite a simple operation from a position above and remote from the tablet, more particularly from a position of a display superposed to the tablet.

It is a second object of the invention to provide a coordinate input device with display having an improved maneuverability and visibility of the position display.

According to the invention, these objects are achieved by providing a coordinate input device having the features specified in claim 1.

In the device according to the invention, the position appointing means is formed by a magnetism generator which generates a biasing magnetic field by which the electromagnetic coupling between the magnetostrictive way and the detection coil is locally increased. Accordingly, the position appointing means is a cordless device.

The display unit is superposed on the tablet and may have any type and thickness, provided that it permits application of at least a small intensity of magnetic field to the magnetostrictive transmission medium therethrough.

Further improvements of the device according to the invention are indicated in the dependent claims.

The objects, features and advantages of the invention will become clear from the following description of the preferred embodiment.

Fig. 1 is an illustration of the X-direction position detecting section in an embodiment of the invention;

Fig. 2 is a chart showing the relationship between magnetic bias and electro-mechanical coupling coefficient;

Fig. 3 is a diagram showing an example of a change in the electromotive force induced in an X-direction second coil in relation to time;

Fig. 4 is an illustration of a Y-direction position detecting section which is used in combination with the X-direction position detecting section;

Fig. 5 is a plan view showing an example of the construction of the detecting section of the position detecting apparatus;

Fig. 6 is a sectional view taken along the line A-A of Fig 5;

Fig. 7 is a sectional view of an example of a position appointing magnetism generator;

Fig. 8 is an electric circuit diagram of the position appointing magnetism generator;

Fig. 9 is a perspective view of a coordinate input device with display constructed in accordance with the invention; and

Fig. 10 is a block connection diagram of a coordinate input/output circuit.

Before turning to the detailed description of the invention, the principle of the invention will be explained to facilitate the understanding of the invention.

Theory of the Invention:

When magnetostrictive vibration wave is propagated through a magnetostrictive transmission medium, a part of the mechanical vibration energy is converted into magnetic energy to cause a local change in the magnetic field at the position where the vibration wave actually exists. The level of the change in the magnetic field is increased and decreased substantially in proportion to a coefficient of conversion from the mechanical energy to the electric energy. This coefficient will be referred to as "electro-mechanical coupling coefficient", hereinunder. The electro-mechanical coupling coefficient is maximized in a certain range of level of biasing magnetic field.

Therefore, if a magnetic bias of a level just for increasing the electro-mechanical coupling coefficient is applied by a position appointing magnetism generator to a specific portion of a magnetostrictive transmission medium surrounded by a coil substantially over its entire length, a large change in the magnetic field is caused at the moment when such a portion of the transmission medium is reached by the magnetostrictive vibration wave propagating through the transmission medium so that a high voltage is induced in the coil by the magnetostrictive vibration wave at this moment. It is possible to know the time length required for the magnetostrictive vibration wave to reach the position appointed by position appointing magnetism generator and, hence, the appointed position, by detecting the timing of induction of the high voltage in the coil.

It is to be understood also that the magnitude of the magnetostrictive vibration wave, which is caused by applying an instantaneous change in the magnetic field, also is increased as the value of the electro-mechanical coupling coefficient becomes greater. Therefore, if a magnetism of a level capable of substantially increasing the electro-mechanical coupling coefficient is applied by the position appointing magnetism generator only to a preselected portion of a magnetostrictive transmission medium surrounded by a coil over substantial length thereof, a large magnetostrictive vibration wave is produced only at the preselected position when a pulse voltage is applied to the coil. When this magnetostrictive vibration wave reaches another coil provided at the end of the magnetostrictive transmission medium, a high voltage is induced in this coil by the magnetostrictive vibration wave. By detecting the timing of generation of this high voltage, it is possible to know the appointed position.

The position signal based on the timing of the induced electromotive force is inputted to a computer and can be displayed through a driver, on a display unit having, for instance, liquid crystal elements and electrodes arranged in a grid-like form. It is to be noted that, even when this display unit is superposed to the tablet serving as the position appointing means, the magnetic field produced by the position appointing magnetism generator can reach the magnetostrictive transmission mediums across the thickness of the display unit with a sufficient strength.

Since such a magnetic field can be produced by a permanent magnet, it is possible to appoint the position in a code-less manner by using the permanent magnet as the position appointing magnetism generator, and, in addition, the appointed position can be directly displayed on the display unit. By making the display unit have lines and columns correspond to those on the tablet, it is possible to obtain coincidence between the position appointed by the magnetism generator and the position indicated on the display unit.

Making an efficient use of this principle, the invention provides a coordinate input device in which an appointment of position on a tablet is made through the thickness of a display unit superposed to the tablet and the appointed position is directly displayed on the display unit superposed to the tablet.

Preferred embodiments of the invention will be described hereinunder.

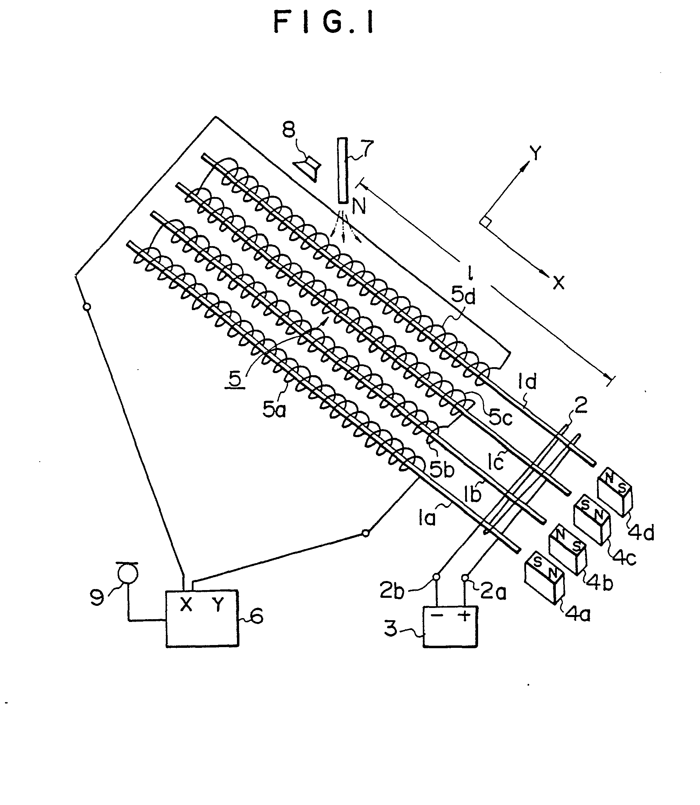

Referring to Fig. 1 which shows the construction of an X-direction position detecting section in a first embodiment, numerals 1a to 1d denote magnetostrictive transmission mediums made from a material having a magnetostrictive effect and arranged to extend in X-direction substantially in parallel with one another. Although any ferromagnetic material can be used as the material of the magnetostrictive transmission medium, it is preferred to use materials having large magnetostrictive effect for producing large magnetostrictive vibration wave, such as, for example, amorphous alloys having large iron contents.

It is also preferred that the material has a small coercive force in order that it may not easily be magnetized when approached by a magnet.

Examples of amorphous alloys suitably used are $Fe_{67}Co_8B_{14}Si_1$ (atomic %) and $Fe_{81}B_{13.5}C_2$ (atomic %) and the like. Each of the magnetostrictive transmission mediums 1a to 1d has an elongated form, preferably a thin web-like form with a rectangular cross-section or a linear form with a circular cross-section. When the medium has a rectangular cross-section, the width is preferably several millimeters and thickness is several to several tens of micrometers (μm) for simultaneously satisfying requirements of both the easy fabrication and superior characteristics.

An X-direction first coil 2 is wound commonly round one ends of the magnetostrictive transmission mediums 1a to 1d. Although the number of turns of this coil 2 is 2 (two) in the illustrated case, this is not exclusive and the coil 2 can have a single turn or 3 or more turns. This first coil 2 is adapted to produce a momentary change in the magnetic field in the direction perpendicular to the coil surface so as to generate a magnetostrictive vibration wave in the portion of the mediums 1a to 1d surrounded by this coil 2. One end 2a of the coil 2 is connected to the (+) terminal of a pulse current generator 3 capable of generating a pulse current of a level large enough to generate the magnetostrictive vibration wave, while the other end 2b of the coil 2 is connected to the (−) terminal of the pulse current generator 3.

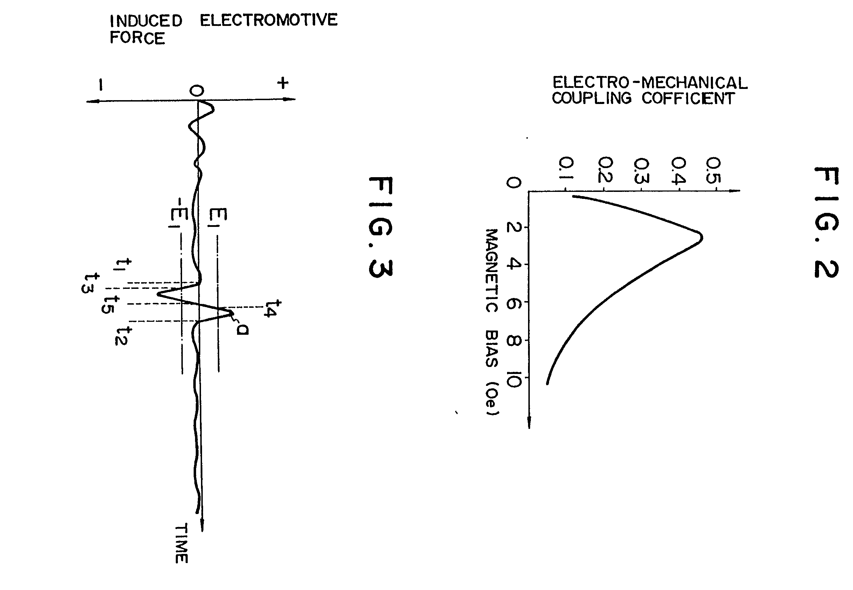

Numerals 4a to 4d represent biasing magnetic bodies adapted to apply a biasing magnetic field in the direction parallel to the magnetostrictive transmission mediums 1a to 1d in the portion of these mediums surrounded by the first coil 2. By the application of this biasing magnetic field, it is possible to cause a large magnetostrictive vibration by a comparatively small electric current. Namely, since the electro-mechanical coupling coefficient of the magnetostrictive transmission medium 1a to 1d is maximized at a certain level of the biasing magnetic field as shown in Fig. 2, it is possible to effectively produce the magnetostrictive vibration wave by applying such a level of the magnetic bias to the portion of the magnetostrictive transmission mediums surrounded by the first coil 2. The biasing magnetic bodies 4a, 4c have polarity reverse to that of the biasing magnetic bodies 4b, 4d.

Referring to Fig. 1, coils 5a to 5d are wound round corresponding magnetostrictive transmission mediums 1a to 1d. These second coils 5a to 5d are for detecting the voltage induced by the magnetostrictive vibration wave propagating through the magnetostrictive transmission mediums 1a to 1d, and are wound over a substantial region along the length of respective magnetostrictive transmission mediums, and the region surrounded by these second coils 5a to 5d is the region in which the position is appointed and detected. In order to induce a high voltage, each second coil preferably has a large pitch. In the illustrated embodiment, the pitch of the second coil is 7 turns per centimeter.

All of the second coils 5a to 5d have an identical winding direction which is, in this embodiment, counter-clockwise. Connections are made between the terminal ends of the coils 5a and 5b, between the starting ends of the coils 5b and 5c and between the terminal ends of the coils 5c and 5d. The starting ends of the coils 5a and 5d are connected to X-direction direction input terminals of position processing unit 6. Thus, the coils 5a to 5d in this embodiment are connected in series, and the adjacent coils have reverse polarities. These second coils 5a to 5d in combination constitute a second X-direction coil 5. A reference numeral 7 designates a bar magnet serving as a position appointing magnetism generator. In the illustrated embodiment, the bar magnet 7 has a diameter of 3 mm and a length of 50 mm.

The arrangement shown in Fig. 1 is intended to detect the position in the X-direction appointed by this bar magnet 7.

A reference numeral 8 designates a transmitter for transmitting a supersonic signal for informing the position processing unit 6 of the instruction for commencement of the measurement. The supersonic signal is received by a receiver 9 for receiving the supersonic wave. Supersonic ceramics microphone capable of performing both the transmission and receiving are used as the transmitter 8 and the receiver in the described embodiment. How the transmitter 8 and the receiver 9 are used will be described later in more detail.

Referring now to Fig. 1, it is assumed here that the position appointing bar magnet 7 is placed at a point on the magnetostrictive transmission medium 1a spaced by a distance 1 from the center of the X-direction first coil 2, with its N pole directed downwardly so as to apply a magnetism of a level large enough to cause an appreciable increase of the electro-mechanical coupling coefficient to the portion of the magnetostrictive transmission medium 1a just beneath the magnet 7. When a pulse current is applied by the pulse current generator 3 to the X-direction first coil 2, the coil 2 generates a momentary change in the magnetic field which in turn causes a magnetostrictive vibration wave in the portion of the magnetostrictive transmission mediums 1a to 1d surrounded by the direction first coil 2. The magnetostrictive vibration wave then propagates longitudinally through the magnetostrictive transmission mediums 1a to 1d at a propagation velocity peculiar to the material of the transmission mediums. The propagation velocity in this case is about 5000 m/sec. During the propagation, conversion of a part of the mechanical vibration energy into magnetic energy is effected at every moment in the portion where the vibration wave exists at the moment. The conversion is made at an efficiency corresponding to the electro-mechanical coupling coefficient in the portion of the transmission mediums. As a result, a voltage is induced in the X-direction second coil 5.

Fig. 3 exemplarily shows how the voltage induced in the second coil 5 is changed in relation to time from a moment $t = 0$ at which the pulse current is applied to the first coil 2. As will be seen from this Figure, the amplitude of the induced voltage exhibits peaks at a moment t0 immediately after t = 0 and a moment t1 to t2 seconds after the moment t0. The peak amplitude of the induction voltage immediately after t = 0 is attributable to an electromagnetic mutual induction between the X-direction first coil 2 and the X-direction second coil 5, while the peak amplitude at moment t1 to t2 seconds after t = 0 is attributable to the fact that magnetostrictive vibration wave generated in the portion of the transmission mediums surrounded by the X-direction first coil 2 has reached the position immediately beneath the position appointing bar magnet 7 where the electro-mechanical coupling coefficient is increased.

A movement of the position appointing bar magnet 7 along the length of the magnetostrictive transmission mediums causes a corresponding movement of the induction voltage along the time axis. It is, therefore, possible to compute the distance 1 and, hence, the X-direction position appointed by the position appointing bar magnet 7, by measuring the time length between the moment t0 and the moment t1-t2.

The measurement of the propagation time for detecting the position may be made by sensing, as shown in Fig. 3, a moment at which the amplitude of the voltage induced by the magnetostrictive vibration has come down below a predetermined threshold level −E1. Alternatively, a moment t4 at which the voltage has come to exceed the threshold value E1 or a zero-cross point t5 may be used as the index of the propagation time.

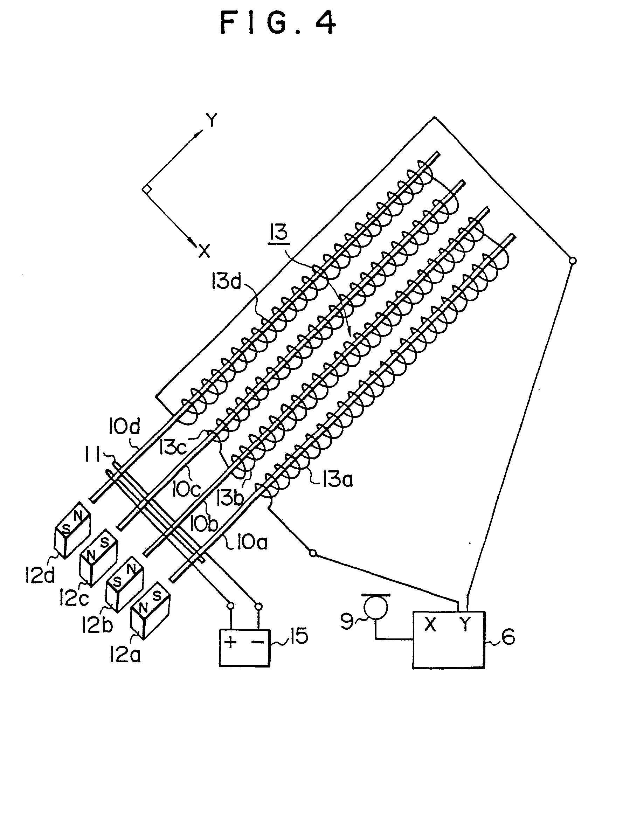

Fig. 4 shows the construction of a Y-direction position detecting section which is used in combination with the X-direction position detecting section. Numerals 10a to 10d denote magnetostrictive transmission mediums which are arranged substantially in parallel with each other in the Y-direction, 11 denotes a Y-direction first coil wound commonly round one ends of the mediums 10a to 10d, 15 denotes a Y-direction pulse current generator adapted to apply a pulse current to the Y-direction first coil 11 so as to produce magnetostrictive vibration wave simultaneously in the magnetostrictive transmission mediums 10a to 10d, 12a to 12d denote biasing magnetic bodies adapted to apply a biasing magnetic field to the portions of the magnetostrictive transmission mediums 10a to 10d surrounded by the Y-direction first coil 11, and 13a to 13d denote coils wound round the magnetostrictive transmission mediums 10a to 10d over substantial length thereof. The coils 13a to 13d are wound in the same direction which is in this case counter clockwise. Connections are made between the terminal ends of the coils 13a and 13b, between the starting ends of the coils 13b and 13c and between the terminal ends of the coils 13c and 13d. The starting ends of the coils 13a and 13d are connected to Y-direction input terminals of the processing unit 6. Thus, the coils 13a to 13d are connected in series such that the adjacent coils have reverse polarities, as in the case of the arrangement shown in Fig. 1. The coils 13a to 13d constitute a Y-direction second coil 13.

As will be explained later, the magnetostrictive transmission mediums 10a to 10d surrounded by the Y-direction first coil 1 and the Y-direction second coil 13 as shown in Fig. 4 are superposed as closely as possible to the magnetostrictive transmission mediums 1a to 1d surrounded by the X-direction first coil 2 and the X-direction second coil 5, and is used for the detection of position appointed by the position appointing magnetism generator in the Y-direction. Detail of the construction and the operation of the arrangement shown in Fig. 4 is materially identical to those of Fig. 1 so that description thereof is omitted.

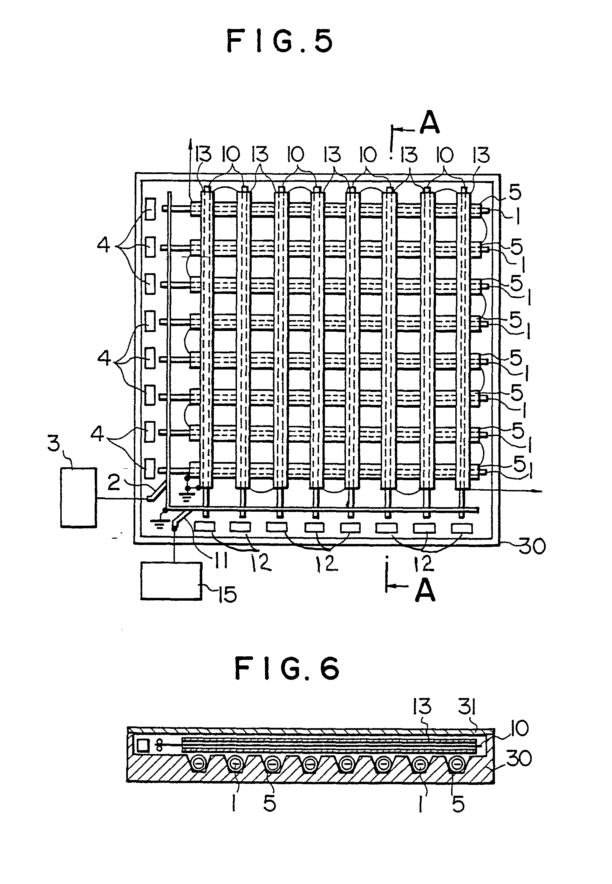

Fig. 5 is a plan view showing an example of the construction of the detecting section of the position detecting apparatus, while Fig. 6 is a sectional view taken along the line A-A of Fig. 5. As will be seen from these Figures, the X-direction second coil 5 receiving the magnetostrictive transmission mediums 1 is placed in a recess formed in the inner bottom surface of a housing 30 and the Y-direction second coil 13 is laid thereon and fixed as required by means of, for example, a bond.

The X- and Y-direction first coils 2 and 11 are grounded at their one ends while the other ends are led out for the connection to the X-direction pulse current generator 3 and the Y-direction pulse current generator 15, respectively. The X- and Y-direction second coils 5 and 13 are grounded at their one ends while the other ends are led out for connection to the processing unit 6.

The biasing magnetic body 4 is fixed to the inner bottom surface of the housing 30 so as to oppose to the ends of the magnetostrictive transmission mediums 1,10, although it may be disposed parallely at the upper, lower or lateral side of the same. The housing 30 is capped with a cover 31 on which the position appointing bar magnet 7 is moved.

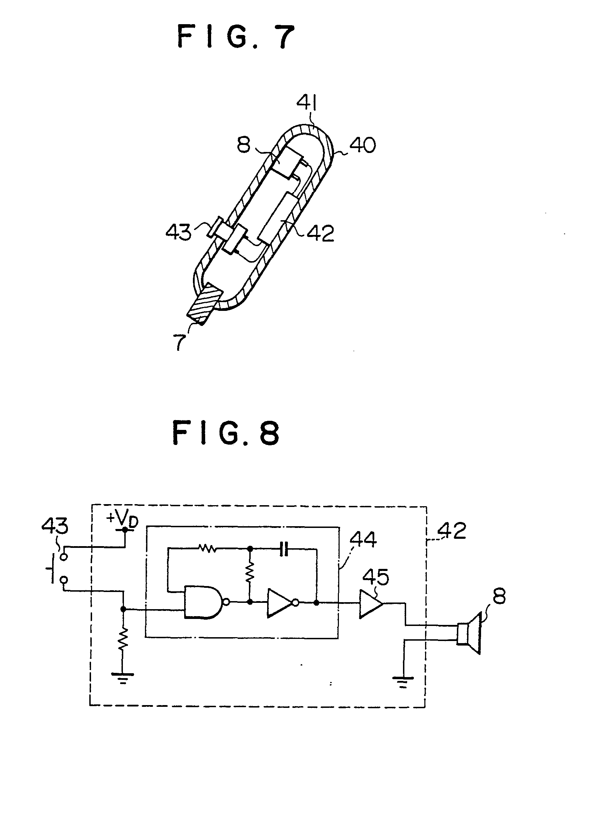

Fig. 7 is a sectional view of an example of the position appointing magnetism generator, while Fig. 8 is an electric circuit diagram of the position appointing magnetism generator.

This position appointing magnetic generator 40 has a cylindrical magnetic body, i.e., the bar magnet 7, attached to one end of a pen-shaped vessel 41 to the other end of which is attached the transmitter 8. The pen-shaped vessel 41 accomodates a signal generator 42 which is adapted to be operated by an operation switch which can be operated externally of the pen-shaped vessel 41. In operation, when the operation switch 43 is turned on, an oscillation circuit including an AND circuit, inverter, resistor and a capacitor starts to oscillate so as to generate continuous pulse signals which represent the commencement of the measurement. The pulse signals are amplified by an amplifier 45 and converted into supersonic signal. This supersonic signal is transmitted to the air and received by a receiver 9.

In the embodiment described hereinbefore, biasing magnetic bodies are provided for respective magnetostrictive transmission medium. This, however, is not exclusive and the arrangement may be such that one biasing magnetic body is used for X-direction magnetostrictive transmission mediums and one biasing magnetic body is used for Y-direction magnetostrictive transmission mediums. In such a case, it is preferred that the X-direction first coil or the Y-direction first coil is wound such that the coil sections wound round adjacent magnetostrictive transmission mediums have opposite winding directions. By so doing, it is possible to decrease the level of electromotive force produced by the electromagnetic induction between the first coil and the second coil.

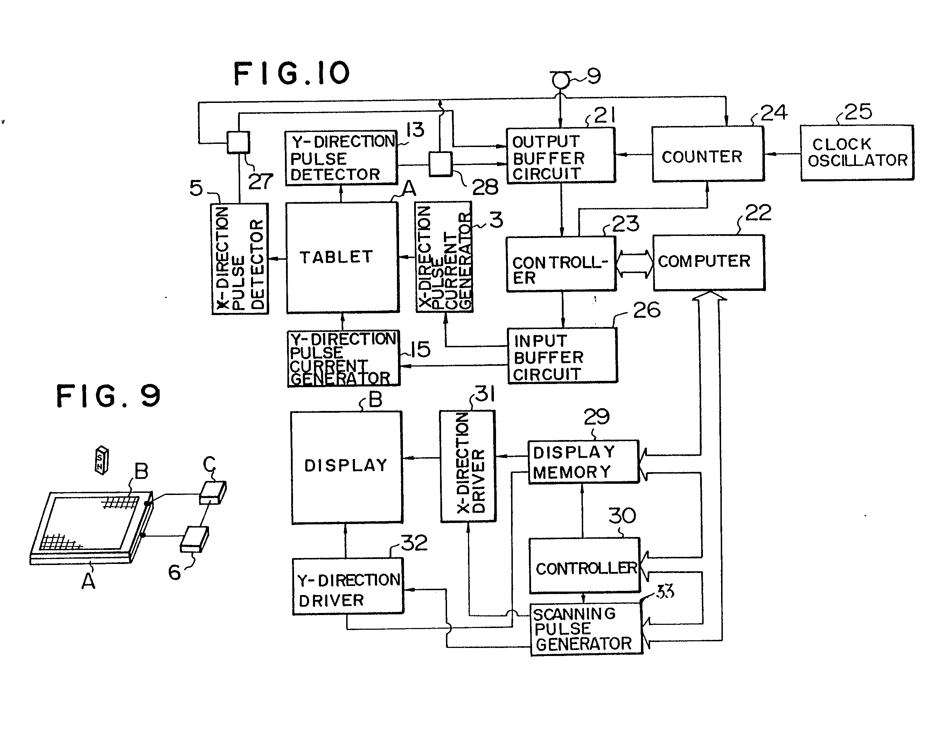

Fig. 9 shows a coordinate input device with display in accordance with the invention. The device has a tablet A constituting the main part of the detection apparatus and a display unit B superposed to the tablet A. The tablet A is connected to the position processing unit 6 while the display unit B is connected to a position display device C.

The display unit B may be a known matrix-type liquid crystal display unit having liquid crystal mediums disposed between horizontal electrodes and vertical electrodes which are arranged to cross each other.

Fig. 10 is a block diagram showing examples of the position processing unit 6 and the position display device C. The operation of this circuit is as follows.

For detecting the X-direction position and the Y-direction position on the tablet A, the X-input circuit and the Y-input circuit of the position processing unit 6 is set in the state ready for the receiving of position signal.

Then, a supersonic signal representing the commencement of measurement, in the form of consecutive pulses of a predetermined frequency, is transmitted by the transmitter 8 and is received by the receiver 9. The received supersonic signal is converted into an electric signal in the form of consecutive pulses. The received pulse signal is then delivered to an output buffer circuit 21 through an amplifier and a wave shaping circuit. Then, a computer reads the consecutive pulse signal from the output buffer circuit through a controller 23, thus recognizing the commencement of the measurement.

Upon receipt of the consecutive pulse signal, the computer 22 delivers a signal to the controller 23 to make the latter clear the content of a counter 24. The counter 24 then starts to count clock pulses produced by a clock oscillator 25 at a frequency of, for example, 100MHz. At the same time, the output of the computer 22 triggers the operation of the X-direction pulse current generator 3 and the Y-direction pulse current generator 15 through an input buffer circuit 26, so that these generators apply pulse currents to the X-direction first coil 2 and the Y-direction first coil 11, respectively.

As a result, electromotive forces are induced in the X-direction second coil 5 and the Y-direction second coil 13 by the magnetostrictive vibration wave. When the magnetostrictive vibration wave reaches the position appointed by the position appointing bar magnet 7, the level of the induced voltage is increased. The induced voltages are inputted to threshold value detecting devices 27 and 28 through multiplexers and other devices. A threshold value such as a voltage $E_1$ is set in these threshold value detecting devices 27 and 28. Assuming that electromotive force as shown by (a) in Fig. 3 has been induced by the magnetostrictive vibration wave, the counter 24 stops the counting operation when the threshold value $E_1$ is exceeded by the electromotive force, i.e., when the portion of positive polarity of the voltage induced by the magnetostrictive vibration wave is detected.

Thus, the counter 24 stops the counting when the voltage induced by the magnetostrictive vibration wave has appeared in the X-direction second coil 5 or the Y-direction second coil 13, so that the time duration from the moment of generation of the first clock pulse is measured as the content of the counter 24. Since the magnetostrictive vibration wave propagates at a substantially constant velocity of about 5,000m/sec, the thus measured time duration corresponds to the X-direction distance between the X-direction first coil 2 and the position appointing magnetism generator 7 or the Y-direction distance between the Y-direction first coil 11 and the position appointing magnetism generator 7. The position data in respective directions thus obtained in the form of digital values are delivered to a digital display through the output buffer circuit 21 for display or to the computer 22 for a suitable processing.

The position data composed of the X-direction position data and the Y-direction position data successively appointed on the tablet A are inputted to the computer 22 and are rearranged in accordance with a predetermined sequence and stored in a display memory (29). The stored data are successively read out in accordance with timing pulses from a controller 30 serving as a display processor, and are delivered to an X-direction driver 31 and a Y-direction driver 32.

The X-direction driver 31 and the Y-direction driver 32 receive scanning pulses produced by a scanning pulse generator 33 in synchronism with the timing pulse delivered by the controller 30. The drivers 31 and 32 deliver the X- and Y-direction position data to the display unit B so that the position appointed on the tablet A is displayed at the corresponding position on the display unit B. Thus, the characters and patterns scribed on the tablet A by the position appointing bar magnet 7 from a position on or above the display unit B superposed to the tablet A is displayed as they are by luminescence on the display unit B. Therefore, it is possible to correct the character inputted to the tablet A with the display of the character after the correction on the display unit B and to effect edition such as insertion and deletion of characters and words, provided that a suitable editing device is connected between the display B and the computer 22.

As has been described, according to the invention, it is possible to appoint a position on a tablet A from a position remote from therefrom, i.e., by means of a position appointing magnetism generator from a position on or above a display unit B which is superposed to the tablet A. At the same time, the appointed position can be instantaneously displayed at the corresponding position on the display unit B, so that the user can easily draft a document with careful consideration of calligraphic specimen and layout through observation of the display on the display unit B.

Furthermore, since the position appointing magnetism generator can appoint the position without requiring any cord for connection to the stationary part of the coordinate input device, the operation for inputting characters and patterns can be very much facilitated.

The tablet A can be reinforced by a reinforcer such as an aluminum sheet or a copper sheet, because the appointment of position can be effected even through such a reinforcer, provided that the intensity of the magnetic field produced by the position appointing magnetism generator is selected suitably.

In addition, since the display unit B is directly superposed to the tablet A, the operator is relieved from the burden of alternating watching of the tablet surface and the display surface.

In addition, since the tablet A and the display unit B are constructed as a unit, a change of document size into any desired size, such as from A4 size to A5 size, can be attained while maintaining the output composition displayed on the display unit and the input composition inputted to the tablet.

For these reasons, the operator can operate the coordinate input device of the invention without any high degree of skill and experience. In addition, the coordinate input device of the invention permits an easy drafting of document in a neat style so that it can be used quite effectively in various tasks which are to be performed on a desk.

## Claims

1. A coordinate input device with display comprising:
- a position detecting tablet (A) for detecting X- and Y-direction position data of a position appointed on said tablet,
- position appointing means (40),
- a coordinate display unit (B) superposed to said tablet (A), and
- a position display device (C) for displaying X- and Y-direction position data appointed on said tablet by said position appointing means at the corresponding position on said display unit, characterized in that
- said tablet (A) is composed of a plurality of X-direction magnetostrictive wire bundles arranged in parallel and each having at least one magnetostrictive transmission medium (1a-1d), a plurality of Y-direction magnetostrictive wire bundles arranged in parallel and each having at least one magnetostrictive transmission medium (10-10d), said X- and Y-direction magnetostrictive wire bundles being arranged substantially orthogonally, a first coil (2) constituted by an X-direction first coil wound commonly round one end of said X-direction magnetostrictive wire bundles and a Y-direction first coil (11) wound commonly round one end of said Y-direction magnetostrictive wire bundles, and a second coil constituted by X-direction second coils (5a-5d) wound round respective X-direction magnetostrictive wire bundles over substantial length of said magnetostrictive wire bundles and connected in series or parallel and Y-direction second coils (13a-13d) wound round respective Y-direction magnetostrictive wire bundles over substantial length of said magnetostrictive wire bundles and connected in series or parallel;
- a pulse current generator (3, 15) is provided for applying a pulse current to one of said first and second coils so as to produce magnetostrictive vibration waves in said magnetostrictive transmission medium;
- a position processing unit (6) is adapted to detect the time length from the moment at which said magnetostrictive vibration wave is produced to the moment at which a voltage induced by the magnetostrictive vibration wave appears in the other of said first and second coils;
- and in that said position appointing means is a position appointing magnetism generator which produces a magnetic bias for locally increasing the electromagnetic coupling between the magnetostrictive wire bundles and said second coil, thereby to enable the generation of said induced voltage in said second coil or the generation of said magnetostrictive vibration waves by said second coil, respectively, said position appointing magnetism generator being not connected to any part of the coordinate input device.

2. A ccordinate input device according to claim 1, characterized in that said magnetostrictive transmission medium is made of an amorphous alloy.

3. A coordinate input device according to claim 1, characterized in that said display unit (B) is composed of a matrix-type liquid crystal display unit having a liquid crystal medium interposed between a plurality of horizontal electrodes and a plurality of vertical electrodes which cross each other.

4. A coordinate input device according to any of the above claims, characterized by at least one biasing magnetic body (4a-4d, 12a-12d) arranged adjacent to the ends of the magnetostrictive wire bundles surrounded by said first coil, for applying a biasing magnetic field to said magnetostrictive wire bundles.

5. A coordinate input device according to claim 4, characterized in that the connection polarity of a portion (5a, 5c, 13a, 13c) of said second coil surrounding about a half of said plurality of magnetostrictive wire bundles is reverse to that of the portion (5b, 5d, 13b, 13d) of said second coil surrounding the other half of said plurality of magnetostrictive wire bundles, and that the polarity of said biasing magnetic body (4a, 4c, 12a, 12c) for applying the biasing magnetic field to said half of said magnetostrictive wire bundles is reverse to that of said biasing magnetic body (4b, 4d, 12b, 12d) for applying the biasing magnetic field to said other half of said magnetostrictive wire bundles.

## Patentansprüche

1. Koordinateneingabevorrichtung mit Anzeige, mit:
- einem Positionserfassungstableau (A) zur Erfassung von X- und Y-Richtungs-Positionsdaten einer auf dem Tableau angegebenen Position,
- Positionsangabemitteln (40),
- einer Koordinatenanzeigeeinheit (B), die dem Tableau (A) überlagert ist, und
- einer Positionsanzeigeeinrichtung (C) zur Anzeige von X- und Y-Richtungs-Positionsdaten, die mit Hilfe der Positionsangabemittel auf dem Tablett angegeben wurden, an einer entsprechenden Stelle auf der Anzeigeeinheit,
dadurch gekennzeichnet,
- daß das Tableau (A) zusammengesetzt ist aus mehreren parallel angeordneten und jeweils weigstens ein magnetostriktives Übertragungsmedium (1a-1d) aufweisenden magnetostriktiven Drahtbündeln in X-Richtung, mehreren parallel angeordneten und jeweils wenigstens ein magnetostriktives Übertragungsmedium (10a-10d) aufweisenden magnetostriktiven Drahtbündeln in Y-Richtung, wobei die magnetostriktiven Drahtbündel in X- und Y-Richtung im wesentlichen rechtwinklig angeordnet sind, einer ersten Spule (2), die gebildet wird durch eine gemeinsam um ein Ende der magnetostriktiven Drahbündel in X-Richtung gewundene erste X-Richtungs-Spule und eine gemeinsam um ein Ende der magnetostriktiven Drahtbündel in Y-Richtung gewundene erste Y-Richtungs-Spule (11), und einer zweiten Spule, die gebildet wird durch jeweils über eine beträchtliche Länge der magnetostriktiven Drahtbündel um die jeweiligen magnetostriktiven Drahtbündel in X-Richtung gewundene und in Serie oder parallel geschaltete zweite X-Richtungs-Spulen (5a-5d) und jeweils über eine beträchtliche Länge der magnetostriktiven Drahtbündel um die jeweiligen magnetostriktiven Drahtbündel in Y-Richtung gewundene und parallel oder in Serie geschaltete zweite Y-Richtungs-Spulen (13a-13d),
- daß ein Stromimpulsgenerator (3, 15) zum Anlegen eines Stromimpulses an eine der ersten und zweiten Spulen vorgesehen ist, um magnetostriktive Schwingungswellen in dem magnetostriktiven Übertragungsmedium zu erzeugen,
- daß eine Positionsverarbeitungseinheit (6) dazu eingerichtet ist, die Zeitdauer zu messen von dem Augenblick, an dem die magnetostriktive Schwingungswelle erzeugt wird, bis zu dem Augenblick, an dem eine durch die magnetostriktive Schwingungswelle induzierte Spannung in der anderen der ersten und zweiten Spulen auftritt,
- und daß die Positionsangabemittel durch einen Positionsangabemagneten gebildet werden, der eine Vormagnetisierung zur örtlichen Erhöhung der elektromagnetischen Kopplung zwischen den magnetostriktiven Drahtbündeln und der zweiten Spule erzeugt, um so die Erzeugung der induzierten Spannung in der zweiten Spule bzw. die Erzeugung der magnetostriktiven Schwingungswelle durch die zweite Spule zu ermöglichen, wobei der Positionsangabemagnet nicht mit irgendeinem Teil der Koordinateneingabevorrichtung verbunden ist.

2. Koordinateneingabevorrichtung nach Anspruch 1, dadurch gekennzeichnet, daß das magnetostriktive Übertragungsmedium aus einer amorphen Legierung hergestellt ist.

3. Koordinateneingabevorrichtung nach Anspruch 1, dadurch gekennzeichnet, daß die Anzeigeeinheit (B) durch eine matrixförmige Flüssigkristallanzeigeeinheit mit einem zwischen mehreren horizontalen Elektroden und mehreren diese kreuzenden vertikalen Elektroden eingefügten Flüssigkristallmedium gebildet wird.

4. Koordinateneingabevorrichtung nach einem der obigen Ansprüche, dadurch gekennzeichnet, daß wenigstens ein Vormagnetisierungs-Magnetkörper (4a-4d, 12a-12d) angrenzend an die von der ersten Spule umgebenen Enden der magnetostriktiven Drahtbündel angeordnet ist, um ein vormagnetisierendes Feld auf die magnetostriktiven Drahtbündel wirken zu lassen.

5. Koordinateneingabevorrichtung nach Anspruch 4, dadurch gekennzeichnet, daß die Anschlußpolarität eines Teils (5a, 5c, 13a, 13c) der zweiten Spule, der etwa die Hälfte der mehreren magnetostriktiven Drahtbündel umgibt, entgegengesetzt zu derjenigen des Teils (5b, 5d, 13b, 13d) der zweiten Spule ist, der die andere Hälfte der magnetostriktiven Drahtbündel umgibt, und daß die Polarität der Vormagnetisierungs-Magnetkörper (4a, 4c, 12a, 12c) zur Erzeugung des vormagnetisierenden Feldes für die erste Hälfte der magnetostriktiven Drahtbündel entgegengesetzt zu der der Vormagnetisierungs-Magnetkörper (4b, 4d, 12b, 12d) zur Erzeugung des vormagnetisierenden Feldes für die andere Hälfte der magnetostriktiven Drahtbündel ist.

## Revendications

1. Dispositif d'entrée de coordonnées avec affichage comprenant:
- un tableau (A) de détection de position pour détecter des données de position dans les directions X et Y d'une position indiquée sur ledit tableau,
- un moyen indicateur de position (40),
- une unité d'affichage de position (B) superposée audit tableau (A), et
- un dispositif d'affichage de position (C) pour afficher des données de position dans les directions X et Y indiquées sur ledit tableau par ledit moyen indicateur de position aux positions correspondantes de ladite unité d'affichage,
characterisé en ce que
- ledit tableau (A) est composé d'une pluralité de faisceaux de fils magnétostrictifs dans la direction X paralleles entre eux et ayant chaqun au moins un milieu de transmission magnétostrictif (1a-1d), une pluralité de faisceaux de fils dans la direction Y paralleles entre eux et ayant chaqun au moins un milieu des transmission magnétostrictif (10a-10d), lesdits faisceaux de fils magnétostrictifs dans les directions X et Y étant disposés sesiblement orthogonles, une première bobine (2) constitué par une première bobine dans la direction X enroulée à la fois autour d'une extrémité desdits faisceaux de fils magnétostrictifs dans la direction X et une première bobine dans la direction Y enroulée à la fois autour d'une extrémité desdis faisceaux des fils magnétostrictif dans la direction Y, et une deuxième bobine constituée par des deuxièmes bobines dans la direction X (5a-5d) respectivement enroulées autour les faisceaux de fils magnétostrictif dans la direction X sur une longueur substantielle de ceux-ci et connectées en serie ou en parallele, et des deuxième bobines dans la direction Y (13a-13d) respectivement enroulées autour les faisceaux de fils magnétostrictif dans la direction Y sour une longueur substantielle de ceux-ci et connectés en serie ou en parallele,

- un générateur d'impulsions de courant (3, 15) est prévu pour envoyer une impulsion de courant a l'une desdits première et deuxième bobines pour produire des ondes de vibration magnétostrictives dans lesdits milieux de transmission magnétostrictifs,

- une unité traitement de position (6) est adaptée à detector la durée qui s'écoule entre l'instant où cette onde de vibration magnétostrictive est produite et l'instant où une tension est induite dans l'autre de ces deuxième et première bobines,

- et en ce que ledit moyen indicateur de position est un générateur de magnétisme indicateur de position qui produit une polarisation magnétique pour accroître localement le couplage electromagnétique entre les faiseceaux de fils magnétostrictifs et lesdits deuxième bobines, pour ainsi permettre la génération de ladite tension induite dans la deuxième bobine ou respectivement de ladite onde de vibration magnétostrictive par les deuxième bobines, ledit générateur de magnétisme indicateur de position n'étant pas relié à aucume des parties du dispositif d'entrée de coordonnées.

2. Dispositif d'entrée de coordonnée selon la revendication 1, charactérisé en ce que ledit milieu de transmission magnétostrictif est fait d'un alliage amorphe.

3. Dispositif d'entrée de coordonnée selon la revendication 1, charactérisé un ce que ladite unité d'affichage (B) est composée d'une unité d'affichage de cristal liquide du type matrice ayant un milieu de cristal liquide inséré entre une pluralité d'électrodes horizontales et une pluralité d'électrodes verticales qui se croisent.

4. Dispositif d'entrée de coordonnées selon une quelconque des revendications précédentes, charactérisé en ce que au moins un corps magnétique polarisant (4a-4d, 12a-12d) est disposé adjacent aux extrémité des faisceaux de fils magnétostrictifs entourés par ladite première bobine, pour appliquer un champ magnétique polarisant auxdits faisceaux de fils magnétostrictifs.

5. Dispositif d'entrée de coordonnée selon la revendication 4, charactérisé un ce que la polarité de connexion d'une partie (5a, 5c, 13a, 13c) de ladite deuxième bobine entourant à peu près une moitié de ladite pluralité de faisceaux de fils magnétostrictifs est inverse à celle de la partie (5b, 5d, 13b, 13d) de la deuxième bobine entourant l'autre moitié de cette pluralité de faisceaux de fils magnétostrictifs, et que la polarité dudit corps magnétique polarisant (4a, 4c, 12a, 12c) pour appliquer le champs magnétique polarisant a cette moitié de faisceaux de fils magnétostrictifs est inverse à cette du corps magnétique polarisant (4b, 4d, 12b, 12d) pour appliquer le champ magnetique polarisant à cette autre moitié de faisceaux de fils magnétostrictifs.

# F I G. I

# FIG. 2

# FIG. 3

# F I G . 4

# F I G. 5

# F I G. 6

4

# FIG. 7

# FIG. 8

# FIG.10

# FIG.9